Europäisches Patentamt

European Patent Office

Office européen des brevets

(19)

(11) Publication number: **0 104 281**
**B1**

(12) **EUROPEAN PATENT SPECIFICATION**

(45) Date of publication of patent specification: **15.04.87**

(51) Int. Cl.⁴: **B 60 J 3/02**

(21) Application number: **82305031.5**

(22) Date of filing: **23.09.82**

(54) Sun visor.

(43) Date of publication of application:
**04.04.84 Bulletin 84/14**

(45) Publication of the grant of the patent:
**15.04.87 Bulletin 87/16**

(84) Designated Contracting States:
**DE GB IT**

(56) References cited:
**DE-A-2 708 127**
**GB-A-1 145 463**
**US-A-1 597 084**
**US-A-2 721 759**
**US-A-2 744 783**
**US-A-2 986 063**
**US-A-3 445 135**

(73) Proprietor: **Cramer, Francis W.**
**4158 Caywood Circle**
**Orlando Florida 32810 (US)**

(72) Inventor: **Cramer, Francis W.**
**4158 Caywood Circle**
**Orlando Florida 32810 (US)**

(74) Representative: **Lambert, Hugh Richmond et al**
**D. YOUNG & CO. 10 Staple Inn**
**London, WC1V 7RD (GB)**

Courier Press, Leamington Spa, England.

# Description

The present invention relates generally to motor vehicle accessories, and more particularly relates to sun visors which are adapted to permit a restricted amount of sunlight to pass through the visor, in order to permit the driver of the vehicle, or other occupant, to view certain objects, such as traffic signals, while reducing or avoiding any glare from the sun or other light sources.

Motor vehicle sun visors are customarily pivotably joined at the edge of the headliner or the interior of the vehicle, adjacent the windscreen. Typically, the sun visor is pivotable downward across the upper portion of the screen, in order to reduce glare entering the windscreen.

If the vehicle approaches a traffic signal in such a manner that the driver must look at the traffic signal and in the general direction of the sun at the same time, the glare of sunlight frequently renders the driver unable to distinguish the colors of the traffic signal. A similar problem occurs when a vehicle is stopped at a traffic light, when the driver is unable to detect a change in the signal colors. In either event, failure of the driver of the vehicle to correctly discern the actual colors of the traffic signals often creates a dangerous condition, and occasionally leads to serious traffic accidents.

There have been suggestions in the prior art for providing special purpose sun visors having means for permitting a restricted amount of light to pass through the sun visor, in order to let the driver observe a traffic signal, or to see the road ahead in high glare conditions.

In U.S. Patent No. 2,744,783, Peavey et al. discloses "twin control glare shields" which essentially comprise light filters permanently fixed in the sun visor. More specifically, the sun visor arrangement disclosed by Peavey has two sighting openings in the visor, one opening providing a shielded sight path through which the driver can look straight ahead, for example while another vehicle is approaching. The second opening provides an unobstructed view through which the driver may look downwardly and towards the right of the vehicle, in order to better see the right side of the road. The remainder of the glare shield is formed of the filtering material.

In U.S. Patent No. 3,445,135, Masi discloses "a perforated sun visor particularly for motor vehicles". As disclosed by the patentee, a conventional sun visor is provided with an accessory which is adapted to be fitted along the bottom thereof. The accessory has a plurality of small perforations having a diameter on the order of 0.5 to 1.5 millimeters, and spaced a distance of between 1.5 to 4 millimeters along the accessory. The object of the perforations is to permit outward visibility, while reducing the amount of "dazzle" or sunlight glare received by the driver through the windscreen.

In U.S. Patent No. 2,721,759, Tashjian discloses a "rotary anti-glare shield for motor vehicles". The arrangement disclosed by the patentee is a perforated disk which is rotatable at a sufficient speed to give the driver the effect of being able to see through the disk, while reducing the amount of glare entering the windscreen toward the driver. The arrangement disclosed by Tashjian requires a motor mechanism of some type to rotate the disk to achieve the objects of that invention.

In U.S. Patent No. 2,986,063, Etzenhouser discloses another rotary "glare shield" similar to that disclosed by Tashjian, in which peripheral slots are defined by two disks having offset slots, with one of the disks being formed of transparent material.

In DE—A—2708127, which forms the basis of the preamble of claim 1, an antidazzle blind is provided for motor vehicles consisting of three or more transparent (Plexiglass) layers superimposed one on top of the other, each provided with a plurality of holes which are in partial registration and provide a variable line of sight therethrough. The layers are adjustable in height and breadth to provide an adjustment to suit different eyes.

By contrast the present invention provides a glare-shielding sun visor of relatively simple construction which permits the driver (or any occupant) of a motor vehicle readily to choose the line-of-sight of incoming light passing through the sun visor by simple adjustment of a manual slide member.

The present invention contemplates a sun visor comprising a substantially flat visor provided with bracket for pivotally mounting the visor interiorly of the vehicle adjacent the windscreen, said visor comprising a first member having a first plurality of slots therethrough and a second member superimposed on said first member and having a second plurality of slots therein which can be selectively positioned in registration with said first plurality of slots, thereby to provide a variable line of sight through the visor, the visor being characterised in that said first member is a fixed member and said second member is a manually operable slide member slidably mounted on said fixed member, and in that some of said second plurality of slots are offset with respect to said first plurality of slots, whereby when one or more of said second plurality of slots are in registration with one or more of said first plurality of slots, at least one other of said second plurality is out of registration with any of the slots of said first plurality. Thus by varying the position of the slide member a different direction for incoming light passing through the visor may be selected by the driver or occupant of the vehicle.

In accordance with a preferred embodiment of the present invention, the slots with the visor member for example, those in a template, are relatively oblong, vertical slots, while the slots in the movable member are vertical, but not as long as the slots in the visor. Further, certain of the slots in the movable member are offset with respect to the next adjacent slots, in order that the driver or occupant can select either a high or low slot in the movable member, with a particular slot in the visor member, to create a greater variety of line-of-sight choices for the driver by the simple expedient of sliding the movable member.

In the specific embodiment of the present invention which is shown in the drawings, the movable member comprises a flat plate slideable back and forth along one of the flat surfaces of that member, and over the slots in the visor member, to obtain the selective alignment between slots in the movable member and slots in the visor member, as described above, the mounting means for the slideable plate in this embodiment preferably comprises parallel flanges extending horizontally along the selected flat surface of the visor member.

The present invention may be adapted for retrofitting onto existing sun visors by a use of a manufactured template having the flanges integrally formed thereon, which sheets is adapted to be fitted over a hole in the existing sun visor.

The invention is further described with reference to the accompanying drawings, in which

FIGURE 1 is a front, perspective view of a vehicle sun visor in accordance with the present invention, in which the template is extended off to the right side for purposes of illustration.

FIGURE 2 is a cross-sectional view of a portion of FIGURE 1 taken along lines 2—2.

FIGURE 3 is another front view of a sun visor in accordance with the present invention, illustrating the template positioned in a manner to permit a restricted amount of sunlight to pass through the sun visor.

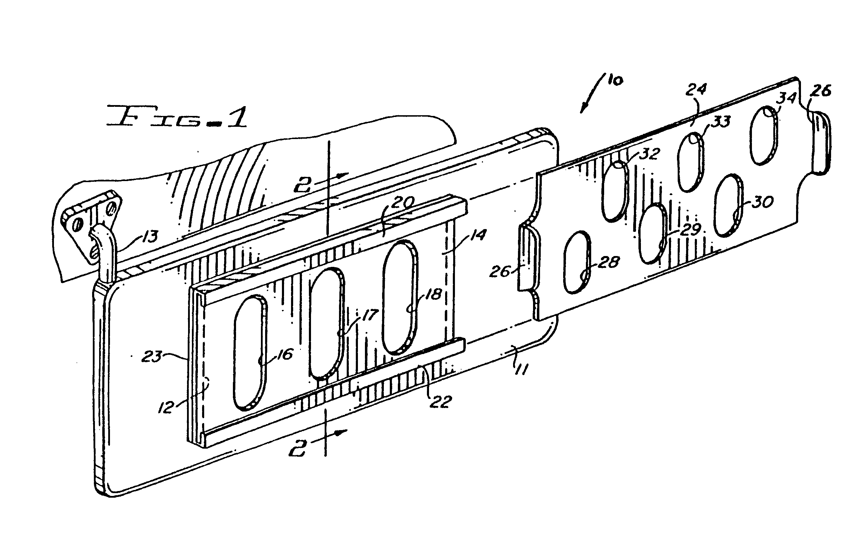

Referring to FIGURE 1, the sun visor of the present invention indicated generally by the reference numeral 10.

The sun visor 10 includes a conventional visor member 11 adapted to be mounted to a vehicle headliner via a post or bracket 13 in a well-known manner.

For purposes of this description, it is assumed that the visor member 11 is a previously manufactured visor to which the present invention is to be adapted. To that end, the visor member 11 is provided with a rectangular hole 12, as by cutting. A rectangular template 14 is fitted over the hole 12. Preferably, the template 14 is made of a high impact plastic, aluminum or similar low cost material.

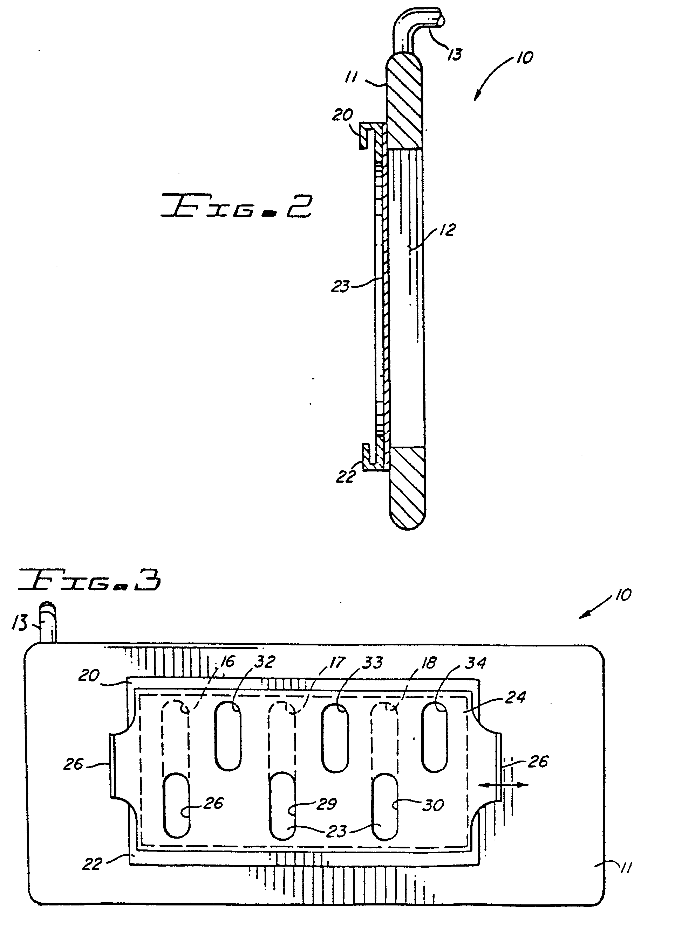

In accordance with the present invention, the template is provided with plural vertical slots 16, 17 and 18, and a pair of horizontally extending parallel flanges 20 and 22. Referring to FIGURE 2, a layer 23 of a smoked (bronzed) Plexiglass (Registered Trade Mark) extends across the sheet 14 and over the slots 16, 18 to reduce the glare from light entering those slots. Preferably, the layer 23 is between the template 14 and the member 11.

As seen on the right side of FIGURE 1, the sun visor 10 is provided with a moveable member formed of a flat plate 2 having curled finger grips 26 on either end. The moveable member 24 is opaque, and is dimensioned so that it may slide back and forth between the flanges 20, 22 and the flat surface of the visor member 11, and over the slots 16, 18. The moveable member 24 is further provided with a series of slots 28, 30 and 32, 34. As shown, the slots 28, 30 are smaller in vertical dimension than the slots 16, 18 of the template 14, as the upper slots 32, 34, and is offset with respect to the next adjacent slot in the moveable member. While the arrangement of the slots 28, 30 and 32, 34 of the member 24 is described by way of example, it will be understood that various other combinations of slots in the sun visor member 11 and the moveable member 24 may be used without departing from the scope of the present invention as defined by the appended claims.

Reference is now made to FIGURE 3, where it will be seen that movement of the member 24 back and forth permits either the lower slots 28, 30 to be aligned with the slots 16, 18 in the visor member 11, or alternatively to permit the upper slots 32, 34 to be aligned with slots 16, 18 in the visor member 11. In this way, the driver (or other occupant) of the vehicle may choose whether a higher or lower line-of-sight of light passing through the slots is obtained, and thereby limit any incoming glare with the exception of specific light directed along that line-of-sight.

It will be understood that this arrangement is particularly useful for a vehicle driver approaching a traffic light, or waiting at a traffic light to determine when the signals have changed.

It will be further understood that all light may be prevented from coming through the visor, by positioning the moveable member such that none of its slots are aligned with the slots in the template.

**Claims**

1. A sun visor for motor or other vehicles, comprising a substantially flat visor (10) provided with bracket (13) for pivotally mounting the visor interiorly of the vehicle adjacent the windscreen, said visor (10) comprising a first member (11) having a first plurality of slots (16, 17, 18) therethrough and a second member (24) superimposed on said first member and having a second plurality of slots (28 to 34) therein which can be selectively positioned in registration with said first plurality of slots, thereby to provide a variable line of sight through the visor, said visor being characterised in that said first member (11) is a fixed member and said second member (24) is a manually operable slide member slidably mounted on said fixed member (11), and in that some of said second plurality of slots (28 to 34) are offset with respect to said first plurality of slots (16, 17, 18), whereby when one or more of said second plurality of slots (28 to 34) are in registration with one or more of said first plurality of slots (16, 17, 18), at least one other of said second plurality (28 to 34) is out of registration with any of the slots of said first plurality (16, 17, 18).

2. A visor according to claim 1, characterised in that said second member (24) is movable into at least one position in which all the slots (16, 17, 18) of said first plurality are covered.

3. A visor according to claim 1 or 2, characterised in that the slots (16, 17, 18) of said first plurality and the slots (30 to 34) of the second plurality are of different longitudinal dimensions.

4. A visor according to claim 3, wherein the slots of lesser longitudinal dimension are those located in said second member (24).

5. A visor according to claim 3, characterised in that the slots (16, 17, 18) of the first plurality comprise a single row of parallel elongated slots in or through the first member (11) and the slots (30 to 34) of said second plurality comprise two parallel rows (28 to 30 and 32 to 34) of slots positioned in said second member (24) one above the other, with the slots in the two rows being offset one from the other, and the slots in each of the two rows being of a lesser longitudinal dimension than the slots (16, 17, 18) in or through the first member.

6. A visor according to claim 5, modified in that the single row of slots of larger longitudinal dimension are in the second member (24), and the two rows of slots of lesser longitudinal dimension are in or through the first member (11).

7. A visor according to any one of the preceding claims wherein one or both pluralities of slots is or are covered or filled with a layer (23) of translucent but light absorbing material, whereby the intensity of light passing through said slots, when aligned, is reduced.

8. A visor according to any one of the preceding claims, characterised in that the first member (11) comprises a generally planar member having an opening (12) formed therein into or over which is fixed a template (14) formed with said first plurality of slots (16, 17, 18) and provided with means (20, 22) for slidably mounting the second member (24) thereon.

9. A visor according to claim 8, characterised in that the second member (24) is slidably mounted in a track formed by overturned flanges (20, 22) along the opposite edges of the template.

**Patentansprüche**

1. Sonnenblende für Motor- oder andere Fahrzeuge mit einer im wesentlichen flachen Sonnenblende (10), die mit einem Wandarm (13) für schwenkbare Befestigung der Sonnenblende im Inneren des Fahrzeuges nahe der Windschutzscheibe versehen ist, wobei die Sonnenblende (10) ein erstes Teil (11) mit einer ersten Mehrzahl von Schlitzen (16, 17, 18) durch es hindurch und ein vor dem ersten Teil liegendes zweites Teil (24) mit einer zweiten Mehrzahl von Schlitzen (28 bis 34) darin besitzt, welche selektiv mit der ersten Mehrzahl von Schlitzen fluchtend angeordnet werden kann, um so eine variable Sichtlinie durch die Sonnenblende hindurch zu schaffen, und das zweite Teil (24) in verschiedenen Positionen auf dem ersten Teil (11) positionierbar ist, um so einen oder mehrere ausgewählte Schlitze der zweiten Mehrzahl (28 bis 34) in mit einer Reihe anderer der ersten Mehrzahl (16 bis 18) fluchtende Stellung zu bringen und so die Sichtlinie durch die Sonnenblende hindurch zu variieren, dadurch gekennzeichnet, daß das erste Teil (11) ein feststehendes Teil ist und das zweite Teil (24) ein manuell betätigbares Gleitteil ist, das gleitbar auf dem feststehenden Teil (11) befestigt ist und daß einige der zweiten Mehrzahl von Schlitzen (30 bis 34) gegenüber der ersten Mehrzahl von Schlitzen (16, 17, 18) versetzt sind, wodurch, wenn einer oder mehrere der zweiten Mehrzahl von Schlitzen (28 bis 34) in fluchtender Stellung mit einem oder mehreren der ersten Mehrzahl von Schlitzen (16, 17, 18) sind, wenigstens ein anderer der zweiten Mehrzahl (28 bis 34) in nichtfluchtender Stellung gegenüber irgendeinem der Schlitze der ersten Mehrzahl (16, 17, 18) sich befindet.

2. Sonnenblende nach Anspruch 1, dadurch gekennzeichnet, daß das zweite Teil (24) in wenigstens eine Stellung bewegbar ist, in welcher alle Schlitze (16, 17, 18) der ersten Mehrzahl abgedeckt sind.

3. Sonnenblende nach Anspruch 1 oder 2, dadurch gekennzeichnet, daß die Schlitze (16, 17, 18) der ersten Mehrzahl und die Schlitze (30 bis 34) der zweiten Mehrzahl unterschiedliche Längsabmessungen haben.

4. Sonnenblende nach Anspruch 3, bei der die Schlitze von geringerer Längsabmessung sind als jene, die in dem zweiten Teil (24) angeordnet sind.

5. Sonnenblende nach Anspruch 3, dadurch gekennzeichnet, daß die Schlitze (16, 17, 18) der ersten Mehrzahl eine einzige Reihe paralleler länglicher Schlitze in dem oder durch das erste Teil (11) umfassen und die Schlitze (30 bis 34) der zweiten Mehrzahl zwei parallele Reihen (28 bis 30 und 32 bis 34) von Schlitzen, die in dem zweiten Teil (24) übereinander angeordnet sind, umfassen, wobei die Schlitze in den beiden Reihen gegeneinander versetzt sind und die Schlitze in jeder der beiden Reihen eine geringere Längsabmessung als die Schlitze (16, 17, 18) in dem oder durch das erste Teil haben.

6. Sonnenblende nach Anspruch 5 mit derartiger Abwandlung, daß die einzige Reihe von Schlitzen größerer Längsabmessung in dem zweiten Teil (24) sich befindet und die beiden Reihen von Schlitzen mit geringerer Längsabmessung in dem oder durch das erste Teil (11) angeordnet sind.

7. Sonnenblende nach einem der vorausgehenden Ansprüche, bei der eine oder beide Mehrzahlen von Schlitzen mit einer Schicht (23) von durchscheinendem, aber lichtabsorbierendem Material bedeckt oder gefüllt sind, wodurch die Intensität des durch die Schlitze gehenden Lichtes in ausgerichteter Stellung vermindert wird.

8. Sonnenblende nach einem der vorausgehenden Ansprüche, dadurch gekennzeichnet, daß das erste Teil (11) ein allgemein ebenes Teil mit einer darin ausgebildeten Öffnung (12) aufweist, in oder über der eine Schablone (14) befestigt ist, die mit der ersten Mehrzahl von Schlitzen (16, 17, 18) und mit Einrichtungen (20, 22) zur gleitbaren Befestigung des zweiten Teils (24) darauf versehen ist.

9. Sonnenblende nach Anspruch 8, dadurch gekennzeichnet, daß das zweite Teil (24) gleitbar in einer Laufbahn befestigt ist, die durch umgebogene Flansche (20, 22) entlang einander gegenüberliegenden Kanten der Schablone gebildet wird.

**Revendications**

1. Pare-soleil pour véhicules automobiles ou autres, constitué par un pare-soleil sensiblement plat (10) muni d'un support (13) pour le montage à articulation du pare-soleil à l'intérieur du véhicule près du pare-brise, ledit pare-soleil (10) comprenant un premier élément (11) présentant une première série de fentes (16, 17, 18) le traversant et un second élément (24) superposé audit premier élément et présentant une seconde série de fentes (28 à 34) qu'on peut placer sélectivement en coïncidence avec ladite première série de fentes pour établir par là une ligne variable de vision à travers le pare-soleil, dans lequel ledit second élément (24) peut être placé en divers emplacements sur ledit premier élément (11) de façon à amener une ou plusieurs fentes choisies de ladite seconde série (28 à 34) en coïncidence avec une série de fentes différentes de ladite première série (16—18), pour assurer par là ladite variation de la ligne de vision à travers le pare-soleil, ledit pare-soleil étant caractérisé en ce que ledit premier élément (11) est un élément fixe et ledit second élément (24) est un élément coulissant manoeuvrable manuellement monté coulissant sur ledit élément fixe (11) et en ce que certaines des fentes de ladite seconde série (30 à 34) sont décalées par rapport aux fentes de ladite première série (16, 17, 18), de sorte que quand l'une ou plusiers des fentes de ladite seconde série (28 à 34) sont en coïncidence avec une ou plusieurs des fentes de ladite première série (16, 17, 18), au moins une autre fente de ladite seconde série (28 à 34) n'est pas en coïncidence avec aucune des fentes de ladite première série (16, 17, 18).

2. Pare-soleil selon la revendication 1, caractérisé en ce que ledit second élément (24) peut venir occuper au moins un emplacement dans lequel toutes les fentes (16, 17, 18) de ladite première série sont recouvertes.

3. Pare-soleil selon la revendication 1 ou 2, caractérisé en ce que les fentes (16, 17, 18) de ladite première série et les fentes (30 à 34) de la seconde série sont de dimensions longitudinales différentes.

4. Pare-soleil selon la revendication 3, dans lequel les fentes de moindre dimension longitudinale sont celles situées dans ledit second élément (24).

5. Pare-soleil selon la revendication 3, caractérisé en ce que les fentes (16, 17, 18) de la première série constituent une seule rangée de fentes oblongues parallèles ménagées dans ou à travers le premier élément (11) et les fentes (30 à 34) de ladite seconde série constituent deux rangées parallèles (28 à 30 et 32 à 34) de fentes situées l'une au-dessus de l'autre dans ledit second élément (24), les fentes des deux rangées étant décalées les unes par rapport aux autres, et les fentes de chacune des deux rangées étant de moindre dimension longitudinale que les fentes (16, 17, 18) ménagées dans ou à travers le premier élément (11).

6. Pare-soleil selon la revendication 5, modifié en ce que les fentes de la rangée unique à grande dimension longitudinale sont situées dans le second élément (24), et les deux rangées de moindre dimension longitudinale sont ménagées dans ou à travers le premier élément (11).

7. Pare-soleil selon l'une quelconque des revendications précédentes dans lequel l'une ou l'une et l'autre des séries de fentes sont recouvertes ou remplies d'une couche (23) de matière translucide mais absorbant la lumière, de sorte que l'intensité de la lumière traversant lesdites fentes, en état de coïncidence, est réduite.

8. Pare-soleil selon l'une quelconque des revendications précédentes, caractérisé en ce que le premier élément (11) est un élément dans l'ensemble plan présentant une ouverture (12) dans laquelle ou sur laquelle est fixé un gabarit (14) présentant ladite série de fentes (16, 17, 18) et muni de moyens (20, 22) grace auxquels le second élément (24) est monté coulissant sur lui.

9. Pare-soleil selon la revendication 8, caractérisé en ce que le second élément (24) est monté coulissant dans une glissière formée par des rebords renversés (20, 22) longeant les bords opposés du gabarit.

FIG-1

FIG-2

FIG-3